# EUROPÄISCHE PATENTSCHRIFT

(11) **EP 1 985 987 B1**
(45) Veröffentlichungstag und Bekanntmachung des Hinweises auf die Patenterteilung: **22.05.2013**
(21) Anmeldenummer: 08004474.6
(22) Anmeldetag: 11.03.2008
(51) Int. Cl.: G01N 1/28

(54) **Laser-Mikrodissektionsverfahren und Laser-Mikrodissektionsvorrichtung**
Laser micro-dissection procedure and device
Procédé et dispositif de micro-dissection par laser

(30) Priorität: 04.04.2007 DE 102007016301
(43) Veröffentlichungstag der Anmeldung: 29.10.2008
(73) Patentinhaber: Carl Zeiss Microscopy GmbH, 07745 Jena (DE)
(72) Erfinder: Niyaz, Yilmaz, Dr., 86159 Augsburg (DE); Staltmeier, Thomas, 82383 Hohenpeissenberg (DE); Lüthy, Carsten, 81379 München (DE)
(74) Vertreter: Banzer, Hans-Jörg

(56) Entgegenhaltungen:
- WO-A1-01/79806
- WO-A1-01/79911
- WO-A1-2004/050290
- DE-A1- 3 930 495
- DE-A1- 10 015 156
- JP-A- 2 160 191
- JP-A- 10 258 382
- JP-A- 10 314 966

## Beschreibung

Die vorliegende Erfindung betrifft ein Verfahren und eine Vorrichtung zur Laser-Mikrodissektion.

Laser-Mikrodissektionssysteme werden häufig zur Bearbeitung, Separierung und/oder Gewinnung von biologischen Objekten, insbesondere mikroskopisch kleinen biologischen Objekten, eingesetzt.

In der WO 97/29355 A1 der Anmelderin ist ein Laser-Mikrodissektionssystem beschrieben, mit dessen Hilfe einzelne biologische Objekte, welche auf einem Träger angeordnet sind, rechnergestützt selektiert und mit einem Laserstrahl bearbeitet werden können. Dabei kann ein zuvor selektiertes biologisches Objekt von dem umgebenden biologischen Material mit Hilfe des Laserstrahls rechnergestützt abgetrennt und durch einen laserinduzierten Transportprozess mit Hilfe eines einzelnen Laserschusses von dem Träger zu einer Auffangvorrichtung befördert werden. Als Träger kann beispielsweise sowohl ein Glasobjektträger als auch eine Polymermembran verwendet werden.

Das zuvor beschriebene Verfahren ermöglicht die Separierung, Sortierung und Gewinnung von einzelnen biologischen Objekten, wobei im Rahmen der vorliegenden Patentanmeldung unter dem Begriff "biologische Objekte" vor allem lebende oder fixierte biologische Zellen oder Zellbestandteile verstanden werden, welche Bestandteil eines flüssigen oder festen biologischen Materials, wie beispielsweise eines Zellgewebes, eines Abstrichs oder einer Zellkultur etc. sind, ohne dass jedoch die Erfindung darauf beschränkt ist. Mit Hilfe des zuvor beschriebenen Verfahrens können die jeweils selektierten biologischen Objekte gezielt mit einer ausgewählten Substanz durch berührungslose Laser-Mikroinjektion beladen und anschließend die erfolgreich injizierten biologischen Objekte aussortiert werden. Die biologischen Objekte können nebeneinander auf einem Träger aufgebracht sein, wobei der Vorgang des Absonderns innerhalb kurzer Zeit und berührungslos durchgeführt werden kann. Gleichzeitig bleibt die Überlebensfähigkeit bzw. Morphologie der biologischen Objekte gewährleistet, d.h. die biologischen Objekte werden durch den Mikroinjektionsvorgang und durch den Abtrenn- und Transportprozess nicht geschädigt bzw. beeinträchtigt.

Da das zuvor beschriebene Verfahren manuell nur relativ aufwändig mit der gewünschten Präzision durchgeführt werden kann, ist das in der Druckschrift WO 97/29355 A1 beschriebene Laser-Mikrodissektionssystem rechnergestützt ausgestaltet, d.h. das Ausschneiden und/oder Befördern eines selektierten biologischen Objekts durch einen laserinduzierten Transportprozess erfolgt rechnergestützt, so dass die Laserlichtquelle, welche den zum Schneiden und/oder Transportieren dienenden Laserstrahl erzeugt, automatisch angesteuert und die erforderliche Relativbewegung zwischen dem Laserstrahl und dem die biologischen Objekte aufweisenden Träger automatisch herbeigeführt wird.

In der Druckschrift WO 01/73398 A1 der Anmelderin ist in diesem Zusammenhang ein voll automatisiertes rechnergestütztes Laser-Mikrodissektionssystem beschrieben, wobei eine rechnergestützte Selektion bzw. Markierung der auf dem Träger befindlichen gewünschten Objekte möglich ist, so dass diese nachfolgend automatisch mit dem Laser-Mikrodissektionssystem bearbeitet werden können. Das Laser-Mikrodissektionssystem umfasst hierzu einen Bildschirm bzw. Monitor, auf dem ein von einer digitalen Kamera aufgenommenes Videobild des auf dem Träger befindlichen Materials dargestellt wird. Der Benutzer kann auf dem Bildschirm bzw. dem Videobild mit Hilfe entsprechender Graphiktools eine gewünschte Schnittkurve zeichnen, welche anschließend rechnergestützt automatisch mit dem Laserstrahl nachgefahren wird, um das zuvor selektierte biologische Objekt aus dem umgebenden biologischen Material auszuschneiden. Auf ähnliche Art und Weise kann auf dem Bildschirm bzw. auf dem Videobild auch ein gewünschtes Objekt für den laserinduzierten Transport zu einer Auffangvorrichtung markiert werden, wobei anschließend automatisch ein separater Laserimpuls bzw. Laserschuss an der gewünschten Stelle gesetzt wird, um das damit bestrahlte Objekt von dem Träger zu der Auffangvorrichtung zu katapultieren bzw. zu befördern. Abhängig von der Ausgestaltung der Präparats und des Trägers sowie abhängig von den eingestellten Laserparametern können dabei auch einzelne biologische Objekte unmittelbar aus dem Präparat mit Hilfe eines einzelnen Laserschusses zu der Auffangvorrichtung befördert werden, ohne dass diese zuvor mit Hilfe eines Schneidevorgangs ausgeschnitten und freipräpariert worden sind.

In der Druckschrift WO 03/036266 A1 der Anmelderin ist ein weiter verbessertes voll automatisiertes rechnergestütztes Laser-Mikrodissektionssystem beschrieben, bei dem die Benutzerfreundlichkeit und Funktiönsvielfalt weiter verbessert ist und insbesondere die Verarbeitung einer Vielzahl biologischer Objekte, welche auch unterschiedlicher Art sein können, auf einfache Art und Weise durchgeführt werden kann. Dabei wird in dieser Druckschrift vorgeschlagen, die zuvor selektierten biologischen Objekte in Objektgruppen zusammenzufassen, wobei jeder Objektgruppe eine individuelle Art der Bearbeitung mit dem Laserstrahl zugewiesen werden kann. Die einzelnen Objektgruppen können rechnergestützt ausgewählt werden, wobei die Computersteuerung des Laser-Mikrodissektionssystem derart ausgestaltet ist, dass sie nach einer Auswahl einer Objektgruppe automatisch die Bearbeitung der der ausgewählten Objektgruppe zugeordneten biologischen Objekte gruppenspezifisch mit dem Laserstrahl veranlasst. Alle einer ausgewählten Objektgruppe zugehörigen Objekte werden somit automatisch, d.h. rechnergestützt, nacheinander angefahren und mit Hilfe des Laserstrahls beispielsweise ausgeschnitten und/oder durch den zuvor beschriebenen laserinduzierten Transportprozess von dem Träger zu einer Auffangvorrichtung befördert. Dies ermöglicht, dass beispielsweise sämtliche Objekte einer ersten Objektgruppe in einem ersten Auffangbehälter und sämtliche Objekte einer zweiten Objektgruppe in einem zweiten Auffangbehälter gesammelt werden können, wobei es sich beispielsweise bei den Objekten der ersten Gruppe um Tumorzellen und bei den Objekten der zweiten Gruppe um gesunde Zellen handeln kann. Die Separierung der gewünschten biologischen Objekte wird auf diese Weise für den Benutzer deutlicher vereinfacht und beschleunigt, wobei darüber hinaus für jede Objektgruppe eine unterschiedliche Art der Laserbearbeitung ausgewählt und eingestellt werden kann.

Die WO 01/79806 A1 beschreibt eine Vorrichtung zum Laserschneiden mikroskopischer Proben, welches die Laserintensität, die Fokuslage und die Größe der Blende im Laserstrahl während des Schneidevorgangs nachregelt. Der Schnitt wird dazu zeitgleich mit einer Kamera aufgenommen und mit Hilfe eines Bildverarbeitungsystems ausgewertet Die Laserparameter werden dann für den weiteren Schnitt über einen Rechner auf ein Optimum eingestellt.

In der WO 2004/050290 A1 ist ein Verfahren zur automatischen Bestimmung der Fokuslage einer Laserbearbeitungsmaschine offenbart. Darin werden verschiedene Schnitte mit unterschiedlicher Fokuslage des Laserstrahls in eine Probe eingebracht. Mithilfe einer Kamera und einer Bildauswertung wird die geringste Schnittbreite als Fokuslage identifiziert und im System gespeichert.

Um mit Hilfe der zuvor beschriebenen Laser-Mikrodissektionssysteme optimal arbeiten zu können, muss der Benutzer für jede unterschiedliche Probe die Laserparameter, wie beispielsweise die Laserenergie und den Laserfokus, an die Probe anpassen. Dies ist sowohl für den Schneideprozess als auch für den Transportprozess des jeweiligen Dissektats von großer Bedeutung, damit die Laser-Mikrodissektion mit der erforderlichen Präzision und Zuverlässigkeit durchgeführt werden kann.

Dies wird in der Regel dadurch erzielt, dass der Benutzer einen Probe-Schnitt auf der zu bearbeitenden Probe ausführt, um durch Begutachten dieses Probe-Schnitts feststellen zu können, ob tatsächlich der Laserfokus oder die Laserenergie auf die für die jeweilige Probe optimalen Werte eingestellt sind.

Diese Vorgehensweise ist jedoch derzeit sehr zeitaufwändig und benötigt darüber hinaus entsprechende Erfahrung im Umgang mit dem jeweiligen Laser-Mikrodissektionssystem. Insbesondere bei der Einstellung des optimalen Laserfokuswertes kann es bei mangelnder Erfahrung leicht zu Fehleinschätzungen kommen, so dass das Schneiden und auch der Transportprozess nicht optimal durchgeführt werden können.

Der vorliegenden Erfindung liegt daher die Aufgabe zugrunde, ein verbessertes Laser-Mikrodissektionsverfahren und eine verbesserte Laser-Mikrodissektionsvorrichtung bereitzustellen, womit diese Probleme beseitigt werden können und auf einfache Art und Weise ein Laser-Mikrodissektionsvorgang zuverlässig durchgeführt werden kann, um insgesamt die Benutzerfreundlichkeit und Zuverlässigkeit bei der Durchführung eines Laser-Mikrodissektionsprozesses sowie den Durchsatz bezüglich der pro Zeiteinheit durchführbaren Laser-Mikrodissektionsvorgänge zu erhöhen.

Diese Aufgabe wird erfindungsgemäß durch ein Laser-Mikrodissektionsverfahren mit den Merkmalen des Anspruchs 1 bzw. eine Laser-Mikrodissektionsvorrichtung mit den Merkmalen des Anspruchs 10 gelöst. Die abhängigen Ansprüche definieren bevorzugte und vorteilhafte Ausführungsformen der vorliegenden Erfindung.

Die vorliegende Erfindung betrifft insbesondere das Problem der Einstellung möglichst optimaler Laserparameter zur Durchführung eines Laser-Mikrodissektionsvorgangs.

Dabei wird im Rahmen der Erfindung vorgeschlagen, mit Hilfe eines Laser-Mikrodissektionssystems einen Probe-Schnitt des biologischen Präparats mit Hilfe zuvor festgelegter Laserparameter des Laserstrahls des Laser-Mikrodissektionssystem durchzuführen und anschließend mit Hilfe einer entsprechenden Bildaufnahmeeinheit, beispielsweise einer digitalen Kamera, ein Bild der Schnittlinie dieses Probe-Schnitts aufzunehmen. Dieses aufgenommene Bild der Probe-Schnittlinie wird automatisch mit einer Referenz-Schnittlinie verglichen, wobei hierzu Algorithmen digitaler Bildverarbeitung eingesetzt werden können, um den Grad der Ähnlichkeit der Probe-Schnittlinie mit der Referenz-Schnittlinie durch eine derartige Bildanalyse ermitteln zu können. Wird eine ausreichende Ähnlichkeit zwischen der Probe-Schnittlinie und der Referenz-Schnittlinie festgestellt, kann anschließend ein Lasermikrodissektionsvorgang mit den für die Durchführung der Probe-Schnittlinie zuvor eingestellten Laserparameterwerten durchgeführt werden.

Die Erfindung ermöglicht somit die vollautomatische und rechnergestützte Einstellung der für die jeweilige Probe optimalen Laserparameter, wie beispielsweise Laserfokus und Laserenergie, so dass sich der Benutzer des Laser-Mikrodissektionssystem nicht mehr darum kümmern muss, die für die jeweilige Probe am besten geeigneten Laserparameterwerte manuell einzustellen.

Gemäß einem Ausführungsbeispiel der Erfindung handelt es sich bei den einzustellenden Laserparametern insbesondere um den Laserfokus und die Laserenergie, wobei mit Hilfe der Erfindung für beide Laserparameter nacheinander die optimalen Werte ermittelt werden können. Ebenso ist jedoch auch möglich, dass die einzelnen Laserparameter zeitgleich angepasst werden können.

Gemäß einem weiteren Ausführungsbeispiel der Erfindung werden automatisch, d. h. rechnergestützt, von dem Laser-Mikrodissektionssystem nacheinander mehrere Probe-Schnittlinien in dem zu bearbeitenden biologischen Präparat geschnitten und jeweils separat mit der für das jeweilige Präparat zuvor als optimale Schnittlinie abgespeicherten Referenz-Schnittlinie verglichen, um anschließend diejenige Probe-Schnittlinie zu ermitteln, welche zu der abgespeicherten Referenz-Schnittlinie am ähnlichsten ist, so dass anschließend der Laser-Mikrodissektionsvorgang mit den Laserparameterwerten dieser Probe-Schnittlinie, welche zu der Referenz-Schnittlinie am ähnlichsten ist, durchgeführt werden kann.

Gemäß einer weiteren Ausführungsform der Erfindung wird das Präparat entlang einer Probe-Schnittlinie mit entsprechend eingestellten Laserparameterwerten geschnitten und das von dieser Probe-Schnittlinie aufgenommene Bild mit der abgespeicherten Referenz-Schnittlinie bzw. den entsprechenden Bilddaten verglichen. Ergibt der Vergleich, dass die Probe-Schnittlinie zu der Referenz-Schnittlinie nicht ausreichend ähnlich ist, d. h. die Abweichung zwischen den beiden Schnittlinien außerhalb eines vordefinierten Toleranzbereichs liegt, wird von dem Laser-Mikrodissektionssystem automatisch der jeweilige Laserparameter neu eingestellt und das Verfahren wiederholt, bis die Probe-Schnittlinie zu der Referenz-Schnittlinie ausreichend ähnlich ist, so dass anschließend der Laser-Mikrodissektionsvorgang mit den Laserparameterwerten derjenigen Probe-Schnittlinie, welche als ausreichend ähnlich zu der Referenz-Schnittlinie erkannt worden ist, durchgeführt werden kann.

Durch diese automatische iterative Wiederholung des Verfahrens wird gewährleistet, dass vollautomatisch der für das jeweilige Präparat geeignete Laserparameterwert innerhalb kürzester Zeit ermittelt und für den nachfolgenden Laser-Mikrodissektionsvorgang eingestellt werden kann, da von dem Laser-Mikrodissektionssystem bzw. der Steuerung des Laser-Mikrodissektionssystems im Zuge dieser iterativen Wiederholung der jeweilige Laserparameterwert vorteilhafterweise derart angepasst wird, dass sich die Ähnlichkeit zwischen der Probe-Schnittlinie und der Referenz-Schnittlinie erhöht.

Gemäß einem weiteren Ausführungsbeispiel der Erfindung wird die Ähnlichkeit zwischen dem aufgenommenen Bild der jeweiligen Probe-Schnittlinie und der abgespeicherten Referenz-Schnittlinie bzw. dem abgespeicherten Bild der Referenz-Schnittlinie dadurch festgestellt, dass die beiden Schnittlinien hinsichtlich der Tiefe des Eintrags des Lasers in das biologische Präparat, der Schnittbreite und/oder des Schnittverlaufs bzw. der Schnittform verglichen werden. Die Schnitttiefe des Lasers in dem Präparat ist dabei insbesondere ein Maß für den Laserfokus, während die Schnittbreite insbesondere ein Maß für die Laserenergie darstellt.

In Übereinstimmung mit einem weiteren Ausführungsbeispiel der Erfindung wird ein Laser-Mikrodissektionssystem vorgeschlagen, welches über eine Computersteuerung verfügt, die derart eingerichtet ist, dass sie automatisch das Laser-Mikrodissektionssystem bzw. die entsprechenden Komponenten des Laser-Mikrodissektionssystems zur Durchführung des zuvor beschriebenen Verfahrens ansteuert. Die Erfindung betrifft gemäß einer weiteren Ausführungsform darüber hinaus auch ein Computerprogrammprodukt, welches insbesondere in Form eines Datenträgers vorliegen kann und elektronisch lesbare Steuersignale oder Computerprogramminformationen aufweist, welche derart ausgestaltet sind, dass sie bei Ausführung in einem Computersystem die zuvor erläuterten Verfahrensschritte realisieren. Auf diese Weise kann auch ein Laser-Mikrodissektionssystem durch Einlegen eines erfindungsgemäßen Datenträgers und Laden der entsprechenden Programmdaten auf einfache Art und Weise nachträglich derart aufgerüstet werden, dass die Durchführung eines erfindungsgemäßen Laser-Mikrodissektionsverfahrens mit diesem Laser-Mikrodissektionssystem möglich wird.

Die Erfindung wird nachfolgend näher unter Bezugnahme auf die beigefügte Zeichnung anhand bevorzugter Ausführungsbeispiele erläutert.
Fig. 1 zeigt den Aufbau eines Laser-Mikrodissektionssystems gemäß einem Ausführungsbeispiel der Erfindung,
Fig. 2 zeigt ein Flussdiagramm zur Erläuterung eines Laser-Mikrodissektionsverfahrens gemäß einem Ausführungsbeispiel der Erfindung,
Fig. 3 zeigt ein weiteres Flussdiagramm zur Erläuterung eines Laser-Mikrodissektionsverfahrens gemäß einem weiteren Ausführungsbeispiel der Erfindung, und
Fig. 4A und 4B zeigen beispielhafte Darstellungen einer Referenz-Schnittlinie sowie mehrere Probe-Schnittlinien zur Verdeutlichung der Funktionsweise eines Laser-Mikrodissektionsverfahrens gemäß einem weiteren Ausführungsbeispiel der vorliegenden Erfindung.

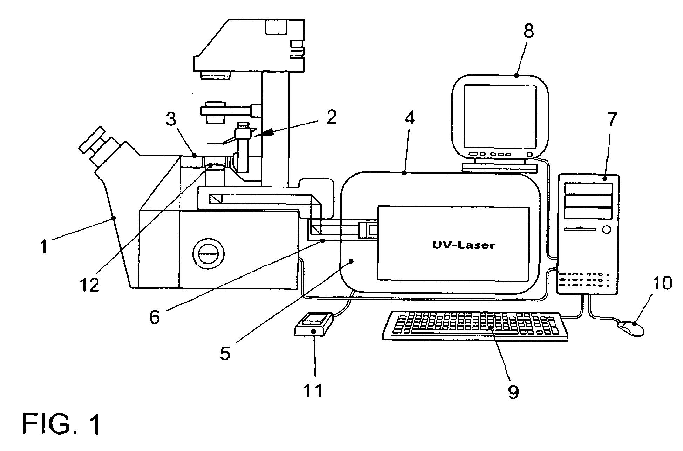

In Fig. 1 ist ein Laser-Mikrodissektionssystem gemäß einem Ausführungsbeispiel der Erfindung dargestellt, wobei es sich um einen inversen Aufbau handelt. Die Erfindung ist jedoch ebenso auf aufrechte, d.h. nicht inverse, Aufbauten anwendbar, bei denen die Bestrahlung mit einem Laserstrahl von oben erfolgt.

Das in Fig. 1 gezeigte Laser-Mikrodissektionssystem umfasst eine Laservorrichtung 4, in der eine Laserlichtquelle zur Erzeugung eines Laserstrahls untergebracht ist. Des Weiteren ist in der Laservorrichtung 4 eine Optik 6 untergebracht, über welche der Laserstrahl in ein Mikroskop 1 eingekoppelt wird und mit deren Hilfe der Laserfokus in der Objektebene auf den optischen Fokus des Mikroskops 1 abgestimmt werden kann. Bei der Laserlichtquelle kann es sich um einen gepulsten UV-Stickstofflaser, beispielsweise mit einer Wellenlänge von 337 nm, einer Impulsenergie von 270 µJ, einer Impulsdauer von 3 ms und einer Impulsfrequenz von 1-30 Impulsen/Sekunde handeln, wobei diese Angaben lediglich beispielhaft sind. So hat sich in der Praxis beispielsweise auch ein Frequenz-verdreifachter Feststofflaser mit einer Wellenlänge von 355 nm als vorteilhaft erwiesen.

Zur präzisen Einstellung der Laserenergie ist ein Quarzfilter 5 senkrecht zum Laserstrahlpfad angeordnet, der über ein (in Fig. 1 nicht gezeigtes) Steuerpanel automatisch oder auch manuell verstellt werden kann. Neben der Einstellung der Laserenergie kann auch der Laserfokus unabhängig von dem Mikroskopfokus eingestellt werden, d. h. der Brennpunkt des Lasers kann in z-Richtung relativ zu der Objektebene des Mikroskops 1 verschoben werden, wobei zu diesem Zweck die in Fig. 1 gezeigten Linsen 6 über einen Schrittmotor bewegt werden können. Auch diese Verstellung erfolgt vorzugsweise automatisch, wobei jedoch auch eine manuelle Verstellung möglich ist.

Bei dem in Fig. 1 gezeigten Ausführungsbeispiel wird der Laserstrahl über mehrere optische Elemente in das Mikroskop 1 eingekoppelt und zu einem Objektiv 12 hin abgelenkt. Der Durchmesser des auf der Objektebene auftreffenden Laserstrahls ist unter anderem von der numerischen Apertur des Objektivs 12 abhängig, wobei ein Objektiv mit einer relativ hohen numerischen Apertur Laserstrahldurchmesser von beispielsweise kleiner als 1 µm ermöglicht.

Der über das Objektiv 12 emittierte Laserstrahl trifft auf einen motorisierten und computergesteuerten Mikroskop- oder Trägertisch 3, auf dem ein Träger mit einem zu bearbeitenden biologischen Material angeordnet ist. Oberhalb des Trägertisches 3 (bzw. bei einem nicht-inversen Aufbau unterhalb davon) befindet sich ein vorzugsweise ebenfalls motorisierter und computergesteuerter Manipulator 2, wobei sowohl der Trägertisch 3 als auch der Manipulator 2 ebenso manuell verstellbar sein können. Die Komponenten 2 und 3 ermöglichen eine exakte Objektpositionierung mit hoher Präzision sowie die rechnergestützte vollautomatische Durchführung von Mikro-Manipulationsprozeduren.

Der motorisierte Trägertisch 3 ist zumindest in der x/y-Ebene verfahrbar. Der Manipulator 2 kann sowohl in x/y-Richtung als auch in z-Richtung verfahren werden. An dem Manipulator 2 kann beispielsweise eine Nadel oder Mikropipette zur Durchführung einer Mikroinjektion angebracht sein. Ebenso kann an dem Manipulator 2 eine Auffangvorrichtung angebracht sein, um von dem Träger herausgelöste biologische Objekte aufzufangen, wie dies nachfolgend noch näher erläutert wird. Der Manipulator 2 dient somit insbesondere als Halteeinrichtung für die genannten Komponenten.

Bei dem Mikroskop 1 kann es sich um ein beliebig ausgestaltetes Mikroskop handeln. Insbesondere ist sowohl die Verwendung eines inversen als auch eines aufrechten Mikroskops oder eines Lasermikroskops denkbar. Bei dem in Fig. 1 dargestellten Laser-Mikrodissektionssystem handelt es sich um einen inversen Aufbau, bei dem der Laserstrahl von unten auf den Träger trifft, um darauf befindliche biologische Objekte durch einen laserinduzierten Transportprozess zu der Auffangvorrichtung zu schleudern bzw. zu transportieren. Bei einem aufrechten Aufbau trifft hingegen der Laserstrahl von oben auf den Träger, so dass aus dem biologischen Material herausgelöste Objekte nach unten auf die unterhalb des Trägers befindliche Auffangvorrichtung fallen bzw. dorthin befördert werden.

Das Mikroskop 1 ist mit einer (nicht gezeigten) Bildaufnahmeeinheit, insbesondere in Form einer CCD-Videokamera ("Charge Coupled Device") ausgestaltet, die den Bereich des Trägers 3 oberhalb des Objektivs 12 aufnimmt. Das Videosignal dieser Videokamera wird einem Computer 7 zugeführt und dort verarbeitet, so dass das entsprechende Videobild in Echtzeit auf dem Bildschirm oder dem Monitor 8 des Computers 7 dargestellt werden kann. Einzelne aufgenommene Videobilder können auf einem geeigneten Speichermedium mit Hilfe des Computers 7 gespeichert werden. Des Weiteren kann mit dem Computer 7 auch ein analoger oder digitaler Videorekorder zur Aufzeichnung der von der Videokamera gelieferten Videobilder gekoppelt sein.

Der Computer 7 bzw. der darin integrierte Prozessor in Verbindung mit der auf dem Computer laufenden Software fungiert als Steuereinheit des Laser-Mikrodissektionssystems zur Steuerung verschiedener Funktionen des Laser-Mikrodissektonssystems. Die Software kann dabei sowohl über einen auswechselbaren Datenträger, wie beispielsweise eine Diskette, eine CD-ROM oder einen Memory Stick, in den Computer 7 geladen werden, oder sich auch fest auf der in dem Computer 7 befindlichen Festplatte oder einem anderen fest integrierten Speichermedium befinden.

Die mit Hilfe des Computers 7 realisierten Steuerfunktionen erlauben insbesondere eine rechnergestützte, d. h. automatische Ansteuerung der Laservorrichtung 4, des Trägertisches 3, des Manipulators 2 sowie des Mikroskops 1, so dass beispielsweise der Laser automatisch aktiviert und der Manipulator 2 bzw. der Trägertisch 3 automatisch verfahren werden können.

Ebenso ermöglichen diese rechnergestützten Funktionen eine benutzerfreundliche Auswahl und Bearbeitung gewünschter biologischer Objekte des auf dem Träger befindlichen biologischen Materials. Zur Einstellung bzw. Auswahl dieser Funktionen sind Eingabemittel, wie beispielsweise eine Tastatur 9 oder eine Computermaus 10 vorgesehen. Des Weiteren ist bei dem in Fig. 1 dargestellten Ausführungsbeispiel der Laservorrichtung 4 auch ein Fußschalter 11 zugeordnet, durch dessen Betätigung der Laser manuell aktiviert werden kann. Nachfolgend sollen einige der bei dem in Fig. 1 gezeigten Laser-Mikrodissektionssystem vorgesehenen Funktionen näher erläutert werden.

Auf dem Bildschirm 8 wird das von der Videokamera augenblicklich aufgenommene Mikroskopbild dargestellt, wobei ein Laser-Zielpunkt auf dem Bildschirm mit Hilfe eines Kreuz oder einer anderen Markierung dargestellt werden kann. Neben diesem Mikroskopbild werden auf dem Bildschirm softwaremäßig realisierte Einstellmöglichkeiten zur Einstellung der Laserenergie, des Laserfokus, der Laserfunktion, der Vergrößerung der verwendeten Objektivlinse 12, zum Abspeichern des dargestellten Mikroskopbilds etc. oder Möglichkeiten zum Aufrufen weiterer Menüfenster dargestellt.

Die mit Hilfe des Laser-Mikrodissektionssystems realisierbaren Funktionen können insbesondere diejenigen Funktionen umfassen, welche in der Druckschrift WO 03/036266 A1 und in der Druckschrift WO 01/73398 A1 der Anmelderin detailliert beschrieben sind.

Insbesondere werden auf dem Bildschirm 8 zusätzlich zu dem Mikroskopbild Graphiktools dargestellt, mit deren Hilfe auf dem Bildschirm 8 bzw. auf dem dargestellten Mikroskopbild Freihandlinien oder vorgegebene Figuren, wie beispielsweise Rechtecke, Kreise, gerade Linien oder Ellipsen, gezeichnet werden können, so dass das Mikroskopbild diesen graphischen Elementen überlagert auf dem Bildschirm 8 dargestellt wird. Mit Hilfe dieser Graphiktools kann ein Benutzer auf dem Bildschirm 8 einzelne zu bearbeitende biologische Objekte des biologischen Materials auswählen, indem z. B. eine Schnittlinie um die zu schneidenden bzw. von dem umgebenden biologischen Material zu separierenden biologischen Objekte gezeichnet wird oder die zu separierenden biologischen Objekte einzeln auf dem Bildschirm mit Hilfe entsprechender Figuren markiert werden.

Auf diese Weise kann der Benutzer die mit Hilfe des nachfolgenden Laser-Mikrodissektionsvorgangs zu bearbeitenden Objekte oder Objektgruppen auswählen, wobei diese Markierung oder Selektion maßgeblich für die anschließende automatische Ansteuerung der einzelnen Komponenten des Laser-Mikrodissektionssystems durch den Computer 7 ist. So wird beispielsweise bei Zeichnen einer Schnittlinie von dem Computer 7 anschließend eine automatische Relativbewegung zwischen dem Trägertisch 3 und dem Laserstrahl der Laservorrichtung 4 durchgeführt, um den Laserstrahl entlang der vorgegebenen Schnittlinie zu führen und somit das jeweils selektierte biologische Objekt von der umgebenden biologischen Masse abzutrennen.

Mit Hilfe der durch den Computer 7 bereitgestellten Steuerfunktionen kann der Benutzer jedoch nicht nur die zu bearbeitenden biologischen Objekte auf dem Bildschirm 8 auswählen, sondern der Benutzer kann insbesondere auch für jedes zuvor selektierte biologische Objekt bzw. für jede zuvor selektierte Objektgruppe die Art der nachfolgenden Laserbearbeitung festlegen. So kann beispielsweise der Benutzer auswählen, dass bei einer ersten Funktion die vorgezeichnete Schnittlinie des jeweiligen biologischen Objekts vollkommen abgefahren wird, um das selektierte biologische Objekt von dem umgebenden biologischen Material freizupräparien. Gemäß einer weiteren Funktion kann vorgesehen sein, dass auf zuvor beschriebene Art und Weise das biologische Objekt durch Schneiden entlang einer Schnittlinie freipräpariert wird, wobei anschließend darüber hinaus ein separater Laserschuss auf das somit freipräparierte biologische Objekt gesetzt wird, um das biologische Objekt von dem Träger zu der Auffangvorrichtung zu katapultieren. Gemäß einer weiteren Funktion kann vorgesehen sein, dass die vorgezeichnete Schnittlinie des jeweiligen biologischen Objekts lediglich bis auf einen vorgegebenen Reststeg abgefahren wird, um anschließend einen separaten Laserschuss auf die Mitte dieses Reststegs zu setzen und das biologische Objekt aus der umgebenden biologischen Masse heraus in den Auffangbehälter zu katapultieren. Darüber hinaus kann eine weitere Laserfunktion zum Setzen separater Katapultier-Laserschüsse vorgesehen sein, d.h. ohne vorhergehende Freipräparation wird an der von dem Benutzer vorgegebenen Stelle ein Laserschuss gesetzt, um das entsprechende biologische Objekt unmittelbar aus dem umgebenden Material herauszukatapultieren und zu der Auffangvorrichtung zu befördern. Bei bestimmten Präparationen, wie beispielsweise zytozentrifugierten Zellen, kann ein derartiger separat gesetzter Laserschuss bereits zum Herauskatapultieren ausreichen. Schließlich besteht auch die Möglichkeit, das eine von dem Benutzer zuvor mit Hilfe der Graphiktools selektierte Fläche des biologischen Materials durch eine Vielzahl von nacheinander gesetzten Laserschüssen abgetragen und in den entsprechenden Auffangbehälter katapultiert wird.

Die zuvor erläuterte Ausgestaltung des Laser-Mikrodissektionssystems ermöglicht, dass in unterschiedliche Objektgruppen zusammengefasste biologische Objekte auf unterschiedliche Art und Weise mit dem Laser bearbeitet werden, so dass beispielsweise für die Objekte einer ersten Objektgruppe lediglich die Schneide-Laserfunktion eingestellt wird, während für die Objekte einer zweiten Objektgruppe die Laserfunktion zum Schneiden in Verbindung mit einem Katapultier-Laserschuss eingestellt wird.

Um mit einem derartigen Laser-Mikrodissektionssystem optimal arbeiten zu können, muss der Benutzer für jede Probe, d.h. für jedes zu verwendende biologische Material, diese Laserparameter an die Eigenschaften des biologischen Materials anpassen, wobei dies insbesondere auf die Laserenergie und den Laserfokus der Laservorrichtung 4 zutrifft. Eine korrekte Einstellung der Laserparameter ist sowohl für den zuvor beschriebenen Schneideprozess als auch für den ebenfalls zuvor beschriebenen Katapultierprozess des jeweiligen Dissektats von entscheidender Bedeutung.

Die optimale Einstellung der Laserparameter kann jedoch sehr zeitaufwändig sein und benötigt darüber hinaus auch einige Erfahrung im Umgang mit dem Laser-Mikrodissektionssystem. Kommt es bei der Einstellung der Laserparameter durch den Benutzer zu einer Fehleinschätzung, kann sich das auf den jeweils durchzuführenden Schneide- bzw. Katapultierprozess negativ auswirken, was zur Folge hat, dass gegebenenfalls das jeweilige Dissektat nicht mit der gewünschten Qualität ausgeschnitten oder katapultiert werden kann, oder das Dissektat sogar durch die Laserbestrahlung beschädigt wird.

Aus diesem Grund ist bei dem in Fig. 1 gezeigten Laser-Mikrodissektionssystem eine automatische Ermittlung und vorzugsweise auch automatische Einstellung der für das jeweilige biologische Präparat möglichst optimalen Laserparameter vorgesehen, wobei zu diesem Zweck vor einem Laser-Mikrodissektionsvorgang eine automatische Routine von dem Laser-Mikrodissektionssystem durchgeführt wird, welche über die auf dem Computer 7 ablaufende Software gesteuert wird. Vorzugsweise wird diese Routine immer vor Bearbeitung eines neuen Präparats durchgeführt, um jeweils an ein neu zu bearbeitendes biologische Präparat die Laserparameter möglichst optimal anpassen zu können.

Dabei macht sich diese Routine die Tatsache zu Nutze, dass mit Hilfe der in dem Mikroskop 1 integrierten Bildaufnahmeeinheit ohnehin ein digitales Bild des auf dem Trägertisch 3 befindlichen biologischen Materials aufgenommen wird und demzufolge zu Auswertungszwecken vorliegt. Die von dem Laser-Mikrodissektionssystem zur Einstellung der optimalen Laserparameter durchgeführte automatische Route beruht dabei darauf, dass in einem zu bearbeitenden und auf dem Trägertisch 3 befindlichen biologischen Material mindestens ein Probe-Schnitt mit voreingestellten Laserparameterwerten eingebracht wird, wobei mit Hilfe der in dem Mikroskop 1 integrierten Bildaufnahmeeinheit ein Bild dieser Probe-Schnittlinie aufgenommen und ausgewertet wird, wobei die Auswertung insbesondere in einem automatischen Vergleich des aufgenommenen Bilds der Probe-Schnittlinie mit einer zuvor festgelegten Referenz-Schnittlinie besteht. Bei der Referenz-Schnittlinie handelt es sich dabei insbesondere um eine Schnittlinie, welche für das jeweils zu bearbeitende Präparat mit optimalen Laserparameterwerten (d.h. mit optimaler Laserenergie und einem optimalen Laserfokus) in dem jeweiligen Präparat geschnitten worden ist, so dass das Laser-Mikrodissektionssystem durch Vergleich der Probe-Schnittlinie mit dieser vorgegebenen Referenz-Schnittlinie feststellen kann, ob die Abweichungen zwischen der Probe-Schnittlinie und der Referenz-Schnittlinie innerhalb eines vordefinierten Toleranzbereichs liegen, so dass anschließend ein Laser-Mikrodissektionsvorgang mit dem voreingestellten Laserparameterwerten durchgeführt werden kann, oder ob die Abweichungen so groß sind, dass die Laserparameterwerte anschließend manuell oder automatisch verändert werden müssen, um sie besser an die Beschaffenheit des zu bearbeitenden biologischen Materials anzupassen.

Gemäß einem Ausführungsbeispiel der Erfindung kann dabei die Steuersoftware des Laser-Mikrodissektionssystems derart ausgestaltet sein, dass vor Durchführung eines Laser-Mikrodissektionsvorgangs der Benutzer über die Steuersoftware die Art bzw. den Typ oder die Beschaffenheit des zu bearbeitenden biologischen Materials auswählt, wobei anschließend von der Steuersoftware abhängig von der Auswahl des Benutzers aus einer gespeicherten Tabelle oder Liste Daten ausgelesen werden, welche die zuvor beschriebene Referenz-Schnittlinie beschreiben. Anschließend kann auf Basis dieser Referenz-Schnittlinie das Laser-Mikrodissektionssystem rechnergestützt und automatisch die zuvor beschriebene Routine zur Ermittlung der für das jeweilige biologische Material optimalen Laserparameterwerte durchführen.

Dies soll nachfolgend anhand verschiedener Ausführungsbeispiele näher erläutert werden.

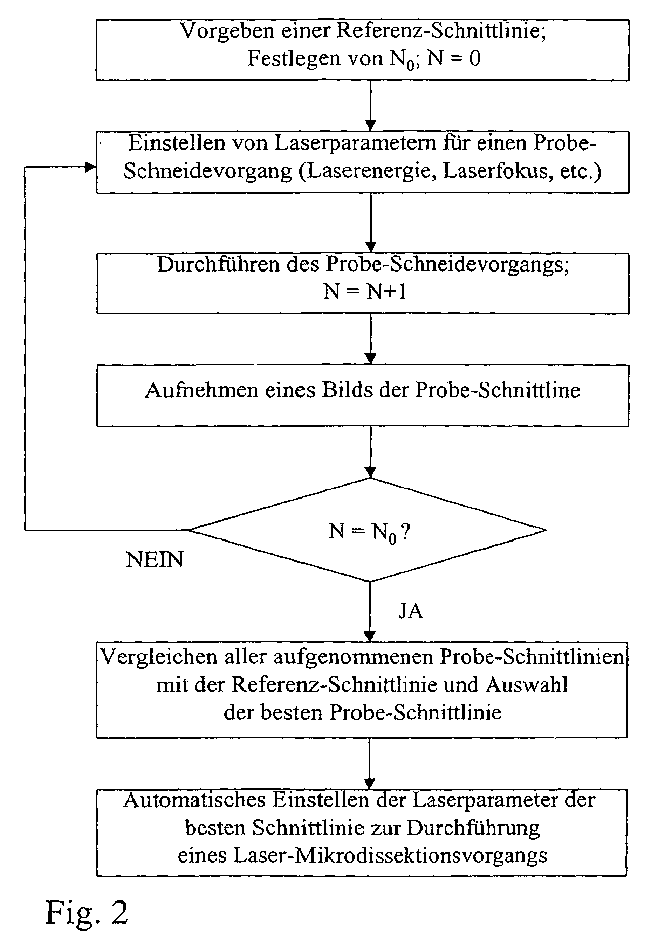

Fig. 2 zeigt ein Flussdiagramm, welches den Ablauf einer automatischen Routine zur Bestimmung der möglichst optimalen Laserparameterwerte durch das Laser-Mikrodissektionssystem gemäß einem Ausführungsbeispiel der Erfindung darstellt.

Bei dem in Fig. 2 dargestellten Ausführungsbeispiel werden nacheinander mehrere Probe-Schnittlinien in dem zu bearbeitenden biologischen Material durchgeführt und anschließend aus den Probe-Schnittlinien diejenige ausgewählt, welche am besten der zuvor gespeicherten Referenz-Schnittlinie entspricht.

Die in Fig. 2 gezeigte Routine startet damit, dass zunächst für das zu bearbeitende biologische Material die Referenz-Schnittlinie, welche mit optimal geeigneten Laserparameterwerten realisiert worden ist, vorgegeben wird. Dies kann dadurch geschehen, dass - wie bereits beschrieben - der Benutzer das zu bearbeitende biologische Material auswählt und anschließend aus einer Tabelle automatisch Daten ausgelesen werden, welche diese Referenz-Schnittlinie beschreiben. Ebenfalls ist jedoch beispielsweise auch denkbar, dass der Benutzer mit Hilfe eines auswechselbaren Datenträgers die Daten der Referenz-Schnittlinie dem Computer 7 zur Verfügung stellt oder auf andere Art und Weise in den Computer 7 eingibt, beispielsweise über die in Fig. 1 gezeigten Eingabemittel 9, 10. Von Bedeutung ist lediglich, dass das Laser-Mikrodissektionssystem bzw. der Computer 7 Kenntnis von Daten der Referenz-Schnittlinie besitzt, wobei gemäß einem weiteren Ausführungsbeispiel der Erfindung diese Daten insbesondere Bilddaten sind, welche insbesondere die Breite und/oder die Tiefe der Referenz-Schnittlinie oder gegebenenfalls auch den Verlauf bzw. die Form der Referenz-Schnittlinie beschreiben.

Darüber hinaus wird zu Beginn der Routine festgelegt, wie viele unterschiedliche Probe-Schnittlinien vor dem Laser-Mikrodissektionssystem durchgeführt werden sollen, wobei dies durch Festlegen eines Parameter N₀ geschieht. Des Weiteren wird zu Beginn der Routine eine Laufvariable N auf den Wert 0 gesetzt, wobei der Wert der Laufvariable mit jeder neuen Probe-Schnittlinie inkrementiert wird.

Wie aus Fig. 2 ersichtlich ist, werden anschließend die Laserparameter für die Durchführung eines Probe-Schneidevorgangs eingestellt, wobei es sich bei den einzustellenden Laserparametern insbesondere um die Laserenergie oder den Laserfokus handeln kann.

Danach wird die Laufvariable N inkrementiert, und es wird ein Schneidevorgang in dem auf dem Trägertisch 3 befindlichen biologischen Material mit den zuvor eingestellten Laserparameterwerten durchgeführt, wobei mit Hilfe der in dem Mikroskop 1 integrierten Bildaufnahmeeinheit, welche in Form einer digitalen Kamera realisiert sein kann, ein Bild der Probe-Schnittlinie aufgenommen und die entsprechenden Daten dem Computer 7 zugeführt werden.

Anschließend wird überprüft, ob die Anzahl der durchgeführten Probe-Schneidvorgänge dem zuvor festgelegten Wert N₀ entspricht. Falls nein, wird derselbe Vorgang (Einstellen der Laserparameter, Durchführen einer Probe-Schnittlinie und Aufnehmen eines Bilds der Probe-Schnittlinie) so lange wiederholt, bis der Wert der Laufvariablen N dem zuvor festgelegten Wert N₀ entspricht.

Entspricht der Wert der Laufvariablen N dem Wert N₀, so bedeutet dies, dass dem Computer 7 bzw. der darauf laufenden Software die Bilddaten von insgesamt N unterschiedlichen Probe-Schnittlinien vorliegen, welche Eigenschaften der jeweiligen Probe-Schnittlinie, wie insbesondere die Schnittbreite und die Schnitttiefe, beschreiben. Der Computer 7 bzw. die Software kann somit automatisch durch Vergleich der Bilddaten der aufgenommenen Probe-Schnittlinien mit den ebenfalls zur Verfügung stehenden Daten der Referenz-Schnittlinie feststellen, welche der Probe-Schnittlinien bezüglich der zuvor genannten Eigenschaften (Schnitttiefe, Schnittbreite oder auch Schnittverlauf) am besten den Daten der Referenz-Schnittlinie entspricht.

Anschließend werden die Laserparameter automatisch von dem Laser-Mikrodissektionssystem auf diejenigen Werte eingestellt, mit denen zuvor die Probe-Schnittlinie durchgeführt worden ist, wobei zu diesem Zweck z.B. nach dem Einstellen der Laserparameterwerte für jede einzelne Probe-Schnittlinie die Werte der Laserparameter für jede Probe-Schnittlinie von dem Computer 7 in Form einer Tabelle erfasst und gespeichert werden, um später wieder darauf zurückgreifen zu können.

Selbstverständlich ist alternativ auch möglich, dass dem Benutzer lediglich die als "beste" Probe-Schnittlinie erkannte Probe-Schnittlinie in Form einer Anzeige auf dem Bildschirm 8 und gegebenenfalls zusammen mit den entsprechenden Laserparameterwerten mitgeteilt wird, so dass der Benutzer manuell die entsprechenden Laserparameterwerte, welche zu der "besten" Probe-Schnittlinie passen, an dem Laser-Mikrodissektionssystem einstellen kann.

Anschließend kann mit Hilfe der auf diese Art und Weise eingestellten Laserparameterwerte ein Laser-Mikrodissektionsvorgang in Bezug auf das auf dem Trägertisch 3 befindliche biologische Material durchgeführt werden, wobei es sich bei dem Laser-Mikrodissektionsvorgang um jede Art der zuvor beschriebenen Bearbeitungen mit Hilfe des Laserstrahls handeln kann.

Der Vollständigkeit halber soll darauf hingewiesen werden, dass bei dem in Fig. 2 dargestellten Ausführungsbeispiel das Einstellen der Laserparameterwerte für jede einzelne Probe-Schnittlinie sowohl manuell durch den Benutzer als auch automatisch durch das Laser-Mikrodissektionssystem bzw. dessen Computer 7 erfolgen kann. Die Qualität der Schnittparameter kann auch unabhängig von der jeweiligen Probe festgestellt werden. Darüber hinaus ist es möglich, dass beim Einstellen der Laserparameterwerte sowohl ein entsprechender Wert für die Laserenergie als auch ein entsprechender Wert für den Laserfokus eingestellt wird, während gemäß einer alternativen Ausführungsform das in Fig. 2 gezeigte Verfahren separat einmal für die Laserenergie und einmal für den Laserfokus oder für jeden weiteren Laserparameterwert durchgeführt wird, was die Genauigkeit bei der Auswahl der für das jeweilige biologische Material möglichst optimalen Laserparameterwerte erhöht.

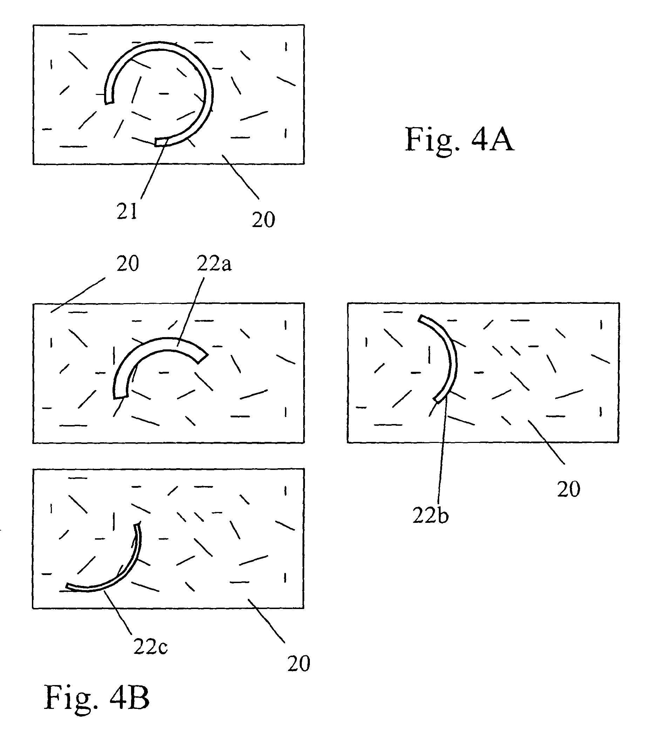

Zur Verdeutlichung des zuvor anhand von Fig. 2 erläuterten Verfahrens ist in Fig. 4A das Bild einer Referenz-Schnittlinie 21 dargestellt, welche in einem biologischen Material 20 eingebracht worden ist. Fig. 4B zeigt verschiedene Probe-Schnittlinien 22a-22c, welche in demselben biologischen Material 20 mit Hilfe des in Fig. 2 dargestellten Verfahrens ausgebildet worden sind. Mit Hilfe der auf dem Computer 7 des Laser-Mikrodissektionssystems laufenden Bilderkennungssoftware wird nun das Bild der Referenz-Schnittlinie mit den Bildern der einzelnen Probe-Schnittlinien 22a-22c verglichen und anschließend automatisch diejenige Probe-Schnittlinie ausgewählt, welche bezüglich der Eigenschaften der Schnittlinie am besten der Referenz-Schnittlinie 21 entspricht. Bei dem in Fig. 4B dargestellten Beispiel ist dies die Probe-Schnittlinie 22b, da diese beispielsweise bezüglich der Schnittbreite am besten der in Fig. 4A dargestellten Referenz-Schnittlinie 21 entspricht. Anschließend wird der Laser-Mikrodissektionsvorgang mit denjenigen Laserparameterwerten durchgeführt, welche als Grundlage zur Erzeugung der Probe-Schnittlinie 22b gedient haben.

Selbstverständlich sind die Darstellungen von Fig. 4A und Fig. 4B beispielhaft zu verstehen, ohne dass die in Fig. 4A und Fig. 4B dargestellten Verläufe und Formen der Schnittlinien auf irgendeine Art und Weise die Erfindung einschränken.

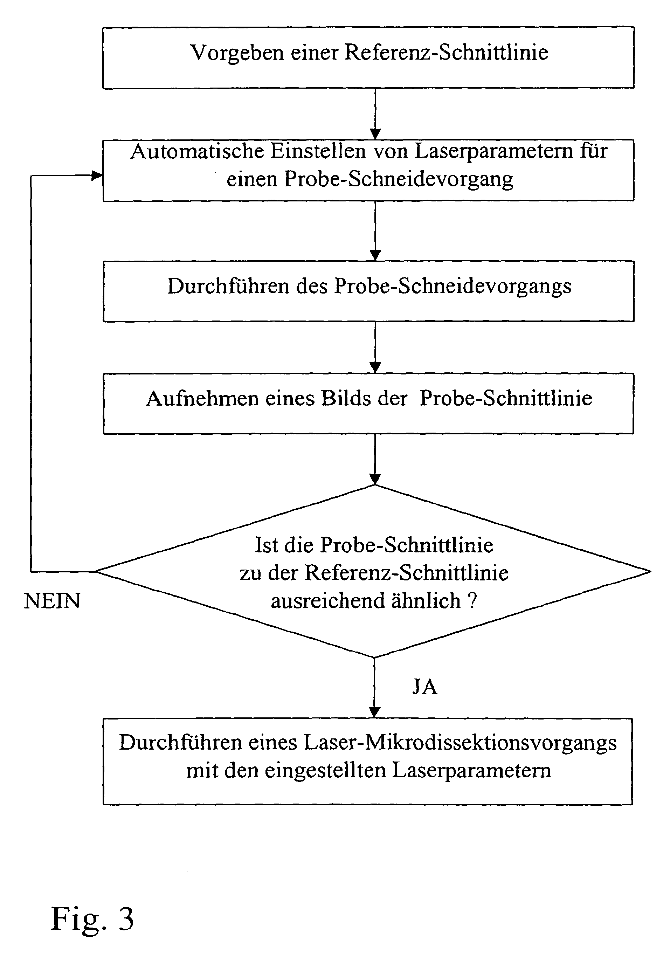

In Fig. 3 ist eine von dem Laser-Mikrodissektionssystem automatisch durchgeführte Routine zur Einstellung möglichst optimaler Laserparameterwerte gemäß einem weiteren Ausführungsbeispiel der Erfindung dargestellt.

Das in Fig. 3 dargestellte Ausführungsbeispiel unterscheidet sich von dem in Fig. 2 gezeigten Ausführungsbeispiel im Wesentlichen dadurch, dass von dem Laser-Mikrodissektionssystem durch einen iterativen Vorgang die Laserparameterwerte automatisch so verändert werden, dass die mit den jeweiligen Laserparameterwerten durchgeführte Probe-Schnittlinie stufenweise an die Referenz-Schnittlinie angenähert wird, so dass sie schließlich zu der vorgegebenen Referenz-Schnittlinie ausreichend ähnlich ist, um anschließend einen Laser-Mikrodissektionsvorgang mit den zuletzt eingestellten Laserparameterwerten durchzuführen.

Wie bei dem in Fig. 2 dargestellten Ausführungsbeispiel werden zunächst die Daten der Referenz-Schnittlinie in dem Computer 7 gespeichert oder dem Computer 7 vorgegeben.

Anschließend wird ähnlich zu dem in Fig. 2 dargestellten Ausführungsbeispiel mit auf bestimmte Werte eingestellten Laserparametern ein Probe-Schneidevorgang in dem auf dem Trägertisch 3 befindlichen biologischen Material durchgeführt und die entsprechende Probe-Schnittlinie mit Hilfe der in dem Mikroskop 1 integrierten Bildaufnahmeeinheit aufgenommen.

Anschließend wird die aufgenommene Probe-Schnittlinie mit Hilfe der im Computer 7 des Laser-Mikrodissektionssystems implementieren Bilderkennungssoftware hinsichtlich ihrer Ähnlichkeit zu der vorgegebenen Referenz-Schnittlinie ausgewertet und beurteilt, wobei diesbezüglich wiederum ein Vergleich der Schnittbreite und/oder der Schnitttiefe durchgeführt werden kann. Liegt die Abweichung zwischen dem aufgenommenen Bild der Probe-Schnittlinie und der vorgegebenen Referenz-Schnittlinie innerhalb einer Toleranzbereichs, d.h. übersteigt die Abweichung einen vordefinierten Grenzwert nicht, so schließt das System darauf, dass die zur Durchführung des Probe-Schneidevorgangs eingestellten Laserparameterwerte ausreichend gut zur Bearbeitung des biologischen Materials bzw. Präparats geeignet sind, so dass anschließend ein Laser-Mikrodissektionsvorgang mit den zuletzt eingestellten Laserparameterwerten durchgeführt werden kann.

Ergibt jedoch der Vergleich der Probe-Schnittlinie mit der Referenz-Schnittlinie, dass die Probe-Schnittlinie nicht ausreichend ähnlich zu der Referenz-Schnittlinie ist, so kehrt das System zu dem Schritt zurück, in dem die Laserparameter für den Probe-Schneidevorgang eingestellt werden, wobei das Laser-Mikrodissektionssystem automatisch abhängig von dem vorhergehenden Vergleichsergebnis die Laserparameterwerte in Form eines Regelungsvorgangs derart verändert, dass sich die Abweichung zwischen der Probe-Schnittlinie und der Referenz-Schnittlinie verringert.

Anschließend wird mit den entsprechend veränderten Laserparameterwerten ein neuer Probeschneidevorgang durchgeführt und ein (digitales) Bild der Probe-Schnittlinie aufgenommen, um in einem erneuten Vergleich mit der Referenz-Schnittlinie die neue Probe-Schnittlinie hinsichtlich ihrer Ähnlichkeit zu der Referenz-Schnittlinie beurteilen zu können.

Dieser Vorgang wird iterativ so lange durchgeführt, bis die augenblickliche Probe-Schnittlinie, d. h. die Ist-Schnittlinie, ausreichend ähnlich zu der Referenz-Schnittlinie, d. h. zu der Soll-Schnittlinie, ist oder mit dieser sogar übereinstimmt. Durch Wahl der Grenzwerte für den zuvor erwähnten Toleranzbereich kann dabei die Genauigkeit des Vergleichsergebnisses und demzufolge die Genauigkeit bei der Einstellung und Wahl der Laserparameter variiert werden.

Wie bereits zuvor anhand des in Fig. 2 dargestellten Ausführungsbeispiels erläutert, kann auch bei dem in Fig. 3 dargestellten Ausführungsbeispiel der zuvor beschriebene Vorgang separat für die Laserenergie und den Laserfokus sowie separat auch für jeden weiteren einstellbaren Laserparameter durchgeführt werden.

Auf diese Weise können automatisch die für das jeweilige Präparat bestmöglich geeigneten Laserparameterwerte ermittelt und eingestellt werden, so dass der zuvor erläuterte Unsicherheitsfaktor, welcher durch einen nicht ausreichend erfahrenen Benutzer entstehen könnte, entfällt.

Selbstverständlich können die zuvor erläuterten Ausführungsbeispiele auch miteinander beliebig kombiniert werden. Darüber hinaus ist es mit der in dem Computer 7 des Laser-Mikrodissektionssystems ablaufenden Bilderkennungssoftware möglich, nicht nur zweidimensionale Bilddaten miteinander zu vergleichen, sondern es ist auch ein Vergleich von Bilddaten möglich, welche die Probe-Schnittlinie und die Referenz-Schnittlinie dreidimensional beschreiben. Schließlich ist als weitere Variante auch möglich, dass von der Referenz-Schnittlinie und der jeweiligen Probe-Schnittlinie nicht nur einzelne Bilder aufgenommen und ausgewertet werden, sondern dass jeweils eine Vielzahl von Bildern aus unterschiedlichen Blickwinkeln aufgenommen und gemeinsam auf zuvor beschriebene Art und Weise ausgewertet werden, um somit eine weitere Verbesserung der Qualität und der automatischen Auswahl und Einstellung der Laserparameter zu erzielen.

## Patentansprüche

1. Verfahren zur Laser-Mikrodissektion,
wobei bei Durchführung eines Laser-Mikrodissektionsvorgangs ein biologisches Objekt eines auf einem Träger befindlichen biologischen Materials (20) mit Hilfe eines Laserstrahls von dem biologischen Material (20) separiert wird,
umfasst die Schritte
a) Einstellen mindestens eines Laserparameters des Laserstrahls auf einen bestimmten Wert und Schneiden des biologischen Präparats entlang einer Probe-Schnittlinie mit dem Laserstrahl,
b) Aufnehmen eines Bilds der im Schritt a) erzeugten Probe-Schnittlinie,
c) automatisches Vergleichen des in Schritt b) aufgenommenen Bilds der Probe-Schnittlinie mit einer Referenz-Schnittlinie, und
d) Durchführung eines Laser-Mikrodissektionsvorgangs mit dem in Schritt a) eingestellten mindestens einen Laserparameterwert, falls der in Schritt c) durchgeführte Vergleich ergibt, dass die Probe-Schnittlinie ausreichend ähnlich zu der Referenz-Schnittlinie ist.

2. Verfahren nach Anspruch 1,
**dadurch gekennzeichnet,**
**dass** der mindestens eine Laserparameter der Fokus des Laserstrahls ist.

3. Verfahren nach Anspruch 1 oder Anspruch 2,
**dadurch gekennzeichnet,**
**dass** der mindestens eine Laserparameter die Energie des Laserstrahls ist.

4. Verfahren nach Anspruch 2 und Anspruch 3,
**dadurch gekennzeichnet,**
**dass** das Verfahren nacheinander separat für den Fokus des Laserstrahls und die Energie des Laserstrahls als der Laserparameter des Laserstrahls durchgeführt wird.

5. Verfahren nach einem der vorhergehenden Ansprüche,
**dadurch gekennzeichnet,**
**dass** die Schritte a)-c) separat für unterschiedliche Werte des mindestens einen Laserparameters des Laserstrahls durchgeführt werden, um für jeden Wert des mindestens einen Laserparameters ein separates Bild der jeweiligen Probe-Schnittlinie zu erhalten, wobei in Schritt d) die für die einzelnen Probe-Schnittlinien erhaltenen Bilder mit der Referenz-Schnittlinie verglichen werden, wobei zur Durchführung des Laser-Mikrodissektionsvorgangs der mindestens eine Laserparameter auf denjenigen Wert eingestellt wird, dessen Probe-Schnittlinie in Schritt c) die größte Ähnlichkeit mit der Referenz-Schnittlinie ergeben hat.

6. Verfahren nach einem der Ansprüche 1-4,
**dadurch gekennzeichnet,**
**dass** für den Fall, dass in Schritt c) der Vergleich keine ausreichende Ähnlichkeit des Bilds der Probe-Schnittlinie mit der Referenz-Schnittlinie ergibt, die Schritte a)-c) automatisch mit einem veränderten Wert des mindestens einen Laserparameters solange wiederholt durchgeführt werden, bis in Schritt c) der Vergleich eine ausreichende Ähnlichkeit des Bilds der Probe-Schnittlinie mit der Referenz-Schnittlinie ergibt.

7. Verfahren nach einem der vorhergehenden Ansprüche,
**dadurch gekennzeichnet,**
**dass** in Schritt d) zur Durchführung des Laser-Mikrodissektionsvorgangs der Wert des mindestens einen Laserparameters automatisch eingestellt wird.

8. Verfahren nach einem der vorhergehenden Ansprüche,
**dadurch gekennzeichnet,**
**dass** in Schritt c) das Bild der Probe-Schnittlinie mit der Referenz-Schnittlinie mittels einer digitalen Bildanalyse verglichen wird.

9. Verfahren nach einem der vorhergehenden Ansprüche,
**dadurch gekennzeichnet,**
**dass** in Schritt c) die Probe-Schnittlinie mit der Referenz-Schnittlinie hinsichtlich einer Schnitttiefe und/oder einer Schnittbreite und/oder eines Schnittverlaufs des Laserstrahls in dem biologischen Material verglichen wird.

10. Vorrichtung zur Laser-Mikrodissektion, umfassend
eine Laserlichtquelle (4) zur Erzeugung eines Laserstrahls,
eine Halteeinrichtung (2) zum Aufnehmen eines Trägers mit einem biologischen Material (20), und
eine Steuerung (7), welche derart ausgestaltet ist, dass sie zur Durchführung eines Laser-Mikrodissektionsvorgangs veranlasst, dass das auf dem Träger befindliche biologische Material (20) mit dem Laserstrahl bestrahlt wird, um ein biologisches Objekt von dem biologischen Material (20) zu separieren,
**dadurch gekennzeichnet,**
**dass** die Vorrichtung eine Bildaufnahmeinheit zum Aufnehmen eines Bilds zumindest eines Abschnitts des auf dem Träger befindlichen biologischen Materials (20) umfasst, und
**dass** die Steuerung (7) derart ausgestaltet ist, dass sie das Laser-Mikrodissektionssystem derart ansteuert, dass
a) das biologische Material (20) entlang einer Probe-Schnittlinie mit Hilfe des Laserstrahls geschnitten wird, wobei mindestens ein Laserparameter des Laserstrahls auf einen bestimmten Wert eingestellt ist,
b) die Bildaufnahmeeinheit ein Bild der Probe-Schnittlinie aufnimmt,
c) die Steuerung (7) automatisch das von der Bildaufnahmeeinheit aufgenommene Bild der Probe-Schnittlinie mit einer Referenz-Schnittlinie vergleicht, und
d) die Steuerung die Durchführung eines Laser-Mikrodissektionsvorgangs mit dem für die Probe-Schnittlinien eingestellten Wert des mindestens einen Laserparameters ermöglicht, falls der Vergleich des Bilds der Probe-Schnittlinie mit der Referenz-Schnittlinie eine ausreichende Ähnlichkeit der Probe-Schnittlinie mit der Referenz-Schnittlinie ergibt.

11. Vorrichtung nach Anspruch 10,
**dadurch gekennzeichnet,**
**dass** die Steuerung (7) zur Durchführung des Verfahrens nach einem der Ansprüche 2-9 ausgestaltet ist.

12. Computerprogrammprodukt mit elektronisch lesbaren Steuersignalen, welche derart ausgestaltet sind, dass bei Verwendung des Computerprogrammprodukts in einem Computersystem eines Laser-Mikrodissektionssystems das Verfahren nach einem der Ansprüche 1-9 durchgeführt wird.

## Claims

1. A method for laser micro-dissection,
wherein when performing a laser micro-dissection process a biological object of biologic material (20) being on a carrier is separated from the biologic material (20) by means of a laser beam,
comprising the steps of:
a) adjusting at least one laser parameter of the laser beam to a certain value and cutting the biologic preparation along a test cutting line with the laser beam,
b) recording an image of the test cutting line generated in step a),
c) automatically comparing of the image of the test cutting line recorded in step b) with a reference cutting line, and
d) carrying out a laser micro-dissection process with the at least one laser parameter value adjusted in step a), if the comparison performed in step c) shows that the test cutting line is sufficiently similar to the reference cutting line.

2. The method of claim 1,
**characterized in that**
the at least one laser parameter is the focus of the laser beam.

3. The method of claim 1 or claim 2,
**characterized in that**
the at least one laser parameter is the energy of the laser beam.

4. The method of claim 2 and claim 3,
**characterized in that**
the method is performed sequentially separately for the focus of the laser beam and the energy of the laser beam as the laser parameter of the laser beam.

5. The method of any one of the preceding claims,
**characterized in that**
steps a)-c) are carried out separately for different values of the at least one laser parameter of the laser beam to obtain a separate image of the respective test cutting line for each value of the at least one laser parameter, wherein in step d) the images obtained for the individual test cutting lines are compared with the reference cutting line, wherein for performing the laser micro-dissection process the at least one laser parameter is adjusted to that value the test cutting line of which in step c) resulted in the greatest similarity to the reference cutting line.

6. The method of any one of claims 1-4,
**characterized in that**
in case in step c) the comparison shows no sufficient similarity of the image of the test cutting line with the reference cutting line steps a)-c) are automatically repeated with a changed value of the at least one laser parameter until in step d) the comparison shows a sufficient similarity of the image of the test cutting line with the reference cutting line.

7. The method of any one of the preceding claims,
**characterized in that**
in step d) for performing the laser micro-dissection process the value of the at least one laser parameter is adjusted automatically.

8. The method of any one of the preceding claims,
**characterized in that**
in step c) the image of the test cutting line is compared with the reference cutting line by means of a digital image analysis.

9. The method of any one of the preceding claims,
**characterized in that**
in step c) the test cutting line is compared with the reference cutting line with respect to a cutting depth and/or a cutting width and/or a cutting course of the laser beam in the biologic material.

10. An apparatus for laser micro-dissection, comprising:
a laser light source (4) for generating a laser beam,
a holding device (2) for receiving a carrier with a biologic material (20), and
a controller (7), which is configured such that, for performing a laser micro-dissection process, it causes a biologic material (20) on the carrier to be irradiated with a laser beam to separate a biologic object from the biologic material (20),
**characterized in that**
the apparatus comprises an image recording device for recording an image of at least a portion of the biologic material (20) being on the carrier, and
**in that** the controller (7) is configured such that it controls the laser micro-dissection system such that
a) the biologic material (20) is cut along a test cutting line by means of the laser beam, wherein at least one laser parameter of the laser beam is adjusted to a certain value,
b) the image recording device records an image of the test cutting line,
c) the controller (7) automatically compares the image of the test cutting line recorded by the image recording device with a reference cutting line, and
d) the controller enables a performing of a laser micro-dissection process with the value of the at least one laser parameter adjusted for the test cutting line if a comparison of the image of the test cutting line with the reference cutting line shows a sufficient similarity of the test cutting line with the reference cutting line.

11. The apparatus of claim 10,
**characterized in that**
the controller (7) is configured to perform the method of any one of claims 2-9.

12. Computer program product with electronically readable control signals which are configured such that when using the computer program product in a computer system of a laser micro-dissection system the method of any one of claims 1-9 is carried out.

## Revendications

1. Procédé de micro-dissection par laser,
sachant que lors de la mise en oeuvre d'une opération de micro-dissection par laser, un objet biologique d'un matériau (20) biologique se trouvant sur un support est séparé à l'aide d'un faisceau laser du matériau (20) biologique,
lequel comprend les étapes suivantes consistant à :
a) régler au moins un paramètre laser du faisceau laser sur une certaine valeur et découper la préparation biologique le long d'une ligne de découpe de test avec le faisceau laser,
b) prendre une image de la ligne de découpe de test produite à l'étape a),
c) comparer automatiquement l'image prise à l'étape b) de la ligne de découpe de test à une ligne de découpe de référence, et
d) mettre en oeuvre une opération de micro-dissection par laser avec la valeur de paramètre laser au moins au nombre de une réglée à l'étape a), s'il ressort de la comparaison effectuée à l'étape c) que la ligne de découpe de test est suffisamment identique à la ligne de découpe de référence.

2. Procédé selon la revendication 1,
**caractérisé**
**en ce que** le paramètre laser au moins au nombre de un est le point de focalisation du faisceau laser.

3. Procédé selon la revendication 1 ou la revendication 2,
**caractérisé**
**en ce que** le paramètre laser au moins au nombre de un est l'énergie du faisceau laser.

4. Procédé selon la revendication 2 ou 3,
**caractérisé**
**en ce que** le procédé est mis en oeuvre de manière séparée d'abord pour le point de focalisation du faisceau laser puis pour l'énergie du faisceau laser en tant que paramètres laser du faisceau laser.

5. Procédé selon l'une quelconque des revendications précédentes,
**caractérisé**
**en ce que** les étapes a) à c) sont mises en oeuvre séparément pour diverses valeurs du paramètre laser au moins au nombre de un du faisceau laser, afin d'obtenir pour chaque valeur du paramètre laser au moins au nombre de un une image séparée de la ligne de découpe respective de test, sachant qu'à l'étape d) les images obtenues pour les diverses lignes de découpe de test sont comparées à la ligne de découpe de référence, sachant qu'aux fins de la mise en oeuvre de l'opération de micro-dissection par laser, le paramètre laser au moins au nombre de un est réglé sur précisément la valeur dont la ligne de découpe de test s'est traduite à l'étape c) par la plus grande ressemblance avec la ligne de découpe de référence.

6. Procédé selon l'une quelconque des revendications 1 à 4,
**caractérisé**
**en ce que** dans le cas où à l'étape c) il ne ressorte de la comparaison aucune ressemblance suffisante de l'image de la ligne de découpe de référence avec la ligne de découpe de référence, les étapes a) à c) sont automatiquement mises en oeuvre avec une valeur modifiée du paramètre laser au moins au nombre de un et ce de manière récurrente jusqu'à ce qu'à l'étape c), il ressorte de la comparaison une ressemblance suffisante entre l'image de la ligne de découpe de test et la ligne de découpe de référence.

7. Procédé selon l'une quelconque des revendications précédentes,
**caractérisé**
**en ce que** la valeur du paramètre laser au moins au nombre de un est automatiquement réglée à l'étape d) aux fins de la mise en oeuvre de l'opération de micro-dissection par laser.

8. Procédé selon l'une quelconque des revendications précédentes,
**caractérisé**
**en ce que** l'image de la ligne de découpe de test est comparée à l'étape c) à la ligne de découpe de référence au moyen d'une analyse d'image numérique.

9. Procédé selon l'une quelconque des revendications précédentes,
**caractérisé**
**en ce qu'**on compare, à l'étape c), dans le matériau biologique, la profondeur de découpe et/ou une largeur de découpe et/ou un tracé de découpe du faisceau laser de la ligne de découpe de test à la profondeur et/ou la largeur et/ou le tracé de la ligne de découpe de référence.

10. Dispositif de micro-dissection par laser, comprenant
une source de lumière laser (4) servant à produire un faisceau laser,
un dispositif de retenue (2) servant à recevoir un support avec un matériau (20) biologique, et
une commande (7) qui est configurée de telle manière qu'elle entraîne la mise en oeuvre d'une opération de micro-dissection par laser, que le matériau (20) biologique se trouvant sur le support est soumis au rayonnement du faisceau laser afin de séparer un objet biologique du matériau (20) biologique,
**caractérisé**
**en ce que** le dispositif comprend une unité de prise d'images servant à prendre un image au moins d'une section du matériau (20) biologique se trouvant sur le support, et
**en ce que** la commande (7) est configurée de telle manière qu'elle commande le système de micro-dissection par laser de telle manière que
a) le matériau (20) biologique est découpé le long d'une ligne de découpe de test à l'aide du faisceau laser, sachant qu'au moins un paramètre laser du faisceau laser est réglé sur une certaine valeur,
b) l'unité de prise d'images prend une image de la ligne de découpe de test,
c) la commande (7) compare automatiquement l'image prise par l'unité de prise d'images de la ligne de découpe de test à une ligne de découpe de référence, et
d) la commande permet la mise en oeuvre d'une opération de micro-dissection par laser avec la valeur, réglée, pour les lignes de découpe de test, du paramètre laser au moins au nombre de un s'il ressort de la comparaison de l'image de la ligne de découpe de test à la ligne de découpe de référence une ressemblance suffisante entre la ligne de découpe de test et la ligne de découpe de référence.

11. Dispositif selon la revendication 10,
**caractérisé**
**en ce que** la commande (7) servant à la mise en oeuvre du procédé est configurée selon l'une quelconque des revendications 2 à 9.

12. Produit de programme informatique comprenant des signaux de commande lisibles par voie électronique, lesquels sont configurés de telle manière que lors de l'utilisation du produit de programme informatique dans un système informatique d'un système de micro-dissection par laser, le procédé est mis en oeuvre selon l'une quelconque des revendications 1 à 9.
